(19) Europäisches Patentamt / European Patent Office / Office européen des brevets

(11) **EP 4 489 202 A1**

(12) **EUROPEAN PATENT APPLICATION**

(43) Date of publication:
08.01.2025 Bulletin 2025/02

(21) Application number: 23306163.9

(22) Date of filing: **07.07.2023**

(51) International Patent Classification (IPC):
**H01M 50/325** (2021.01)     **H01M 50/578** (2021.01)
**H01M 10/052** (2010.01)

(52) Cooperative Patent Classification (CPC):
**H01M 50/325; H01M 50/578;** H01M 10/052;
H01M 50/553

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Automotive Cells Company SE
33520 Bruges (FR)**

(72) Inventors:
• CHOI, Hangjune
33200 BORDEAUX (FR)
• ORIGUCHI, Masato
78120 RAMBOUILLET (FR)

(74) Representative: **Lavoix
2, place d'Estienne d'Orves
75441 Paris Cedex 09 (FR)**

(54) **AN ELECTROCHEMICAL CELL COMPRISING A DOUBLE CHECK-VALVE EMBEDDED IN AN ELECTRICAL TERMINAL**

(57)     An electrochemical cell (10) comprising:
- a can (12),
- an electrical terminal (18) defining an axis (X) and forming a housing (20,
- a plunger (24),
- an upper O-ring (26) and a lower O-ring (28) located on an upper extremity (30) of the plunger along the axis and on a lower extremity (32), and surrounding the axis, the terminal, the plunger, the upper O-ring and the lower O-ring delimiting an intermediate chamber (60).

The lower O-ring forms a lower sealing valve between an interior volume (14) and the chamber. The upper O-ring forms an upper sealing valve between the chamber and an exterior volume (16). The plunger is movable axially with respect to the terminal between an equilibrium position and two working positions in order to let excess gas moving from the interior volume to the exterior volume via the chamber while preventing moisture from doing the opposite.

FIG.2

EP 4 489 202 A1

## Description

The present invention deals with an electrochemical cell, in particular a lithium-ion one.

The invention also deals with a battery comprising one or several such cells.

The term "battery" usually means a plurality of electrochemical cells electrically connected to each other. According to a particular example of battery, the plurality of electrochemical cells is arranged in the form of one or more module(s), each module comprising several electrochemical cells electrically connected to each other and mechanically assembled to each other by a system of assembly, such as assembly plates.

An electrochemical cell usually comprises, in particular, a plurality of positive electrodes intertwined with negative electrodes and separators, known as a "stack" when they are cut in pieces, or as a "jelly roll" when they are continuously wound together. The positive electrodes are connected to each other and to a positive terminal of the cell, and the negative electrodes are connected to each other and to a negative terminal of the cell.

These elements are protected by a mechanically resistant envelope, such as a hard case, also known as a "can", or a soft pouch. A hard case is usually prismatic or cylindrical.

Batteries, in particular lithium-ion ones, are not compatible with water, therefore the can is completely sealed in order to prevent any moisture from entering the electrochemical cell. The can is hermetic and airtight.

However, organic electrolytes used in Li-ion batteries, such as the EC, DMC, EMC solvents or others, and the $LiPF_6$ salt or others, are known for reacting with cathode material, as well as anode material. This contributes to the degradation of the cell performances, even if some of these reactions may also be beneficial in order to form passivation layers on the cathode active material (called CEI, cathode electrolyte interphase) and on the anode material, typically graphite (called SEI, solid electrolyte interphase).

Such reactions are decomposition reactions, and can generate gas inside the electrochemical cell, which may increase the internal pressure. If gas generation continues, the can may be deformed or open due to high pressure. The electrochemical cell no longer functions.

In order to secure a battery life of 15 to 20 years, it is known to reduce gas generation by selecting specific electrolyte solvents and salt compositions, and/or to mix them with specific additives.

However, high energy cathode materials, such as NMC with a high nickel content, happen to be very reactive with the electrolyte solvents and also high energy anode materials, such as SiOx, is known to re-create the solid electrolyte interphase (SEI) continuously along to the charge and discharge cycles due to its high volume change. Such gas generation may limit the use of such high energy materials.

US 2012/028089 describes using a gas permeable membrane which does not let any liquid pass, and a mechanical vent in order to prevent water from going into the electrochemical cell. However, this solution requires a complex venting device which is thus costly. Moreover, it requires additional space in order to be attached to the can, which lowers the energy density of the electrochemical cell.

It is also known to use a sealing valve to let excess gas exit the electrochemical cell. However, there is sometimes a risk that gas and moisture move into the cell via the sealing valve, particularly when the cell stops operating, cools down, and the internal pressure decreases.

An aim of the invention is to solve or improve the above issues, in particular to avoid excessive pressure within the electrochemical cell, while preventing moisture from entering the cell, and without increasing its cost too much or reducing its energy density.

To this end, the invention proposes an electrochemical cell comprising:

- a can defining an interior volume intended to be at a first pressure, and an exterior volume intended to be at an outside pressure,
- at least one electrical terminal connected to the can in a gastight manner, the terminal defining an axis and forming a housing extending from the interior volume to the exterior volume,
- a plunger extending in the housing, and
- an upper O-ring and a lower O-ring respectively located on an upper extremity of the plunger along the axis toward the exterior volume, and on a lower extremity of the plunger toward the interior volume, the upper O-ring and the lower O-ring surrounding the axis, the terminal, the plunger, the upper O-ring and the lower O-ring delimiting an intermediate chamber intended to be at a second pressure,

the lower O-ring being compressed between a first surface of the terminal and a first surface of the plunger and adapted for applying a first force on the plunger per unit of length of the lower O-ring so as to form a lower sealing valve between the interior volume and the chamber,

the upper O-ring being compressed between a second surface of the terminal and a second surface of the plunger and adapted for applying a second force on the plunger per unit of length of the upper O-ring so as to form an upper sealing valve between the chamber and the exterior volume, the plunger being movable axially with respect to the terminal between:

- an equilibrium position, intended to be occupied when the first pressure, the second pressure and the outside pressure are equal to each other, and wherein the first force is larger than the second force,

- a first working position, intended to be occupied when the cell is under operation and the first pressure has increased, wherein the plunger is shifted towards the upper O-ring, the first force is smaller than in the equilibrium position, and the second force is larger than in the equilibrium position, thus allowing excess gas to move from the interior volume into the chamber and preventing gas and moisture from moving from the exterior volume to the chamber, and
- a second working position, intended to be occupied when the cell has stopped operating and the first pressure has decreased, wherein the plunger is shifted back towards the lower O-ring, the first force is larger than in the first operating position, and the second force is smaller than in the first operating position and smaller than the first force, thus allowing excess gas to move from the chamber to the exterior volume and preventing excess gas from moving from the chamber to the interior volume.

In other embodiments, the cell comprises one or several of the following features, taken in isolation or any technically feasible combination:

- the plunger is axisymmetric around the axis;
- the lower O-ring and the upper O-ring are circular in view along the axis and extend parallel to a plane perpendicular to the axis;
- the lower O-ring and the upper O-ring have a same diameter around the axis;
- the lower O-ring and the upper O-ring are structurally analogous to each other;
- in the equilibrium position, the first force defines a first angle with a first plane perpendicular to the axis, the second force defines a second angle with a second plane perpendicular to the axis, the first angle being smaller than the second angle;
- in the equilibrium position: the first surface of the plunger defines a first contact point between the lower O-ring and the plunger, the first contact point defining a first angle; and the second surface of the plunger defines a second contact point between the upper O-ring and the plunger, the second contact point defining a second angle, the first angle being smaller than the second angle;
- the first surface and the second surface of the plunger are concave with respect to the plunger;
- the first surface and the second surface of the terminal comprise first portions forming axial stops for the lower O-ring and the upper O-ring respectively, and second portions forming radial stops for the lower O-ring and the upper O-ring respectively;
- the first portions are perpendicular to the axis, and the second portions are parallel to the axis;
- the terminal comprises a barrel and a cap delimiting the housing, the cap being fixed on the barrel, the upper O-ring being compressed between the cap and the second surface of the plunger, the barrel defining an opening adapted for allowing an introduction of the plunger from the exterior volume into the housing, the cap being intended for being fixed to the barrel after said introduction;
- the barrel comprises a lower part along the axis forming a foot of the terminal, the foot extending in the interior volume; the barrel comprises a median part along the axis, the medial part delimiting the housing radially with respect to the axis; and the terminal comprises a sealing joint compressed between the can, on the one hand, and the lower part and/or the median part, on the other hand;
- the terminal comprises a first spacer extending between the can and the foot along the axis; and
- the terminal comprises an outside part with respect to the can, and a second spacer extending between the outside part and the can, and the outside part surrounding the barrel and being axially sandwiched between the second spacer and a radial protuberance of the barrel.

The invention also proposes a battery, in particular for a vehicle, comprising at least one cell as described above.

The invention and its advantages will be better understood upon reading the following description, given solely by way of example and with reference to the appended drawings, in which:

- Figure 1 is a schematic perspective view of an electrochemical cell according to the invention,
- Figure 2 is a schematic view of an electrical terminal of the cell shown in Figure 1, in cross-section along a plane containing an axis of the terminal,
- Figure 3 is an enlargement of part of Figure 2 centered on the O-rings, and
- Figure 4 is a schematic view of a plunger shown in Figures 2 and 3, in cross-section along the same plan, showing forces applied on the plunger by O-rings.

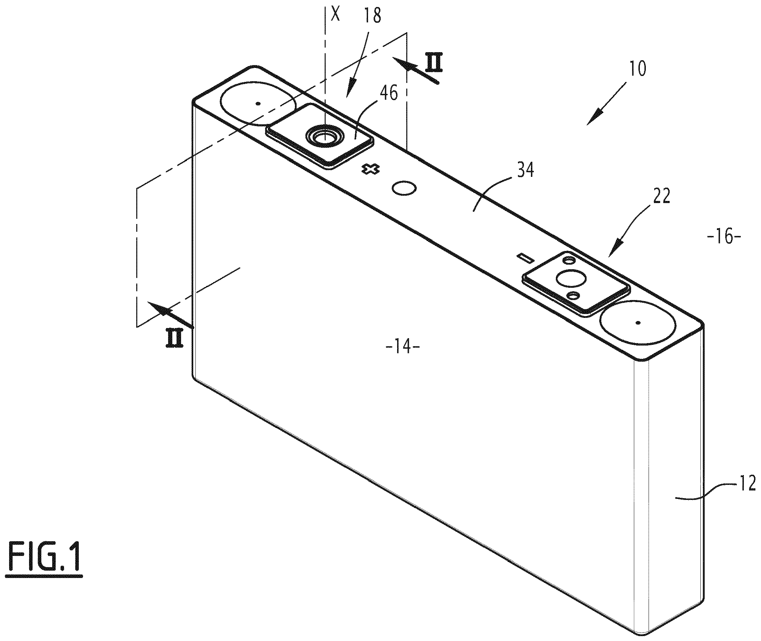

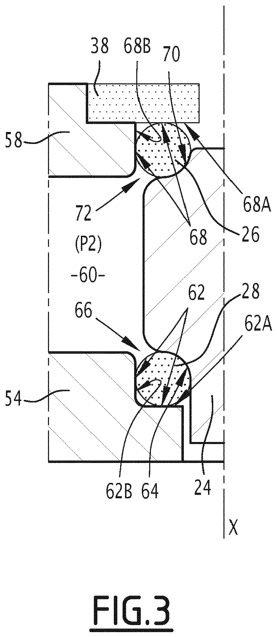

With respect to Figures 1 to 3, an electrochemical cell 10 according to the invention will be described.
The cell 10 is for example intended to be included in a battery (not shown), in particular for an electric or hybrid vehicle (not shown). The cell 10 is advantageously a lithium-ion one.
The cell 10 comprises a can 12 defining an interior volume 14 intended to be at a first pressure P1, and an exterior volume 16 intended to be at an outside pressure P0. The cell 10 comprises an electrical terminal 18 connected to the can 12 in a gastight manner, the terminal defining an axis X and forming a housing 20

extending from the interior volume 14 to the exterior volume 16.

In the example, the terminal 18 is positive and the cell 10 comprises a second, for example negative, electrical terminal 22.

The cell 10 comprises a plunger 24 extending in the housing 20, and an upper O-ring 26 and a lower O-ring 28 respectively located on an upper extremity 30 of the plunger along the axis toward the exterior volume 16, and on a lower extremity 32 of the plunger toward the interior volume 14.

The can 12 for example has a parallelepiped shape and includes a top plate 34.

The second terminal 22 is for example structurally analogous to the terminal 18 and will not be described in detail.

The terminal 18 is for example surrounded by the top plate 34 and electrically connected to internal elements (not shown) of the cell 10. The terminal 18 for example has a rectangular outside shape (Figure 1).

The terminal 18 for example comprises a barrel 36 and a cap 38 delimiting the housing 20, the cap being fixed on the barrel.

The terminal 18 advantageously comprises a sealing joint 40 compressed between the can 12 and the barrel 36.

The terminal 18 for example comprises a first spacer 42 axially extending between the can 12 and a foot 44 of the terminal formed by the barrel 36.

The terminal 18 for example comprises an outside part 46 with respect to the can 12, and a second spacer 48 axially extending between the outside part 46 and the can 12.

The outside part 46 surrounds the barrel 36 and is axially sandwiched between the second spacer 48 and a radial protuberance 50 of the barrel 36.

The barrel 36 advantageously defines an opening 52 adapted for allowing an introduction of the plunger 24 from the exterior volume 16 into the housing 20, the cap 38 being fixed to the barrel after said introduction.

Along the axis X, the barrel 36 comprises a lower part 54 forming the foot 44, a median part 56 delimiting the housing 20 radially with respect to the axis X, and an upper part 58 forming the radial protuberance 50.

The foot 44 extends in the interior volume 14 below the top plate 34. The upper part 58 extends in the exterior volume above the top plate 34.

The median part 56 for example forms a hollow cylinder around the axis X.

The sealing joint 40 is compressed hermetically between the top plate 34 of the can 12, on the one hand, and the lower part 54 and the median part 56, on the other hand.

The upper O-ring 26 and the lower O-ring 28 surrounds the axis X. The terminal 18, the plunger 24, the upper O-ring 26 and the lower O-ring 28 delimit an intermediate chamber 60 intended to be at a second pressure P2.

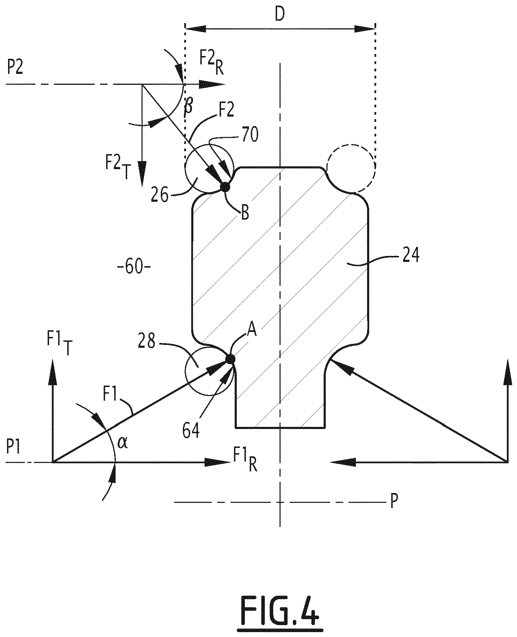

The lower O-ring 28 is compressed between a first surface 62 of the terminal 18 and a first surface 64 of the plunger 30 and adapted for applying a first force F1 (figure 4) on the plunger per unit of length of the lower O-ring so as to form a lower sealing valve 66 between the interior volume 14 and the chamber 60.

The upper O-ring 26 being is compressed between a second surface 68 of the terminal 18 and a second surface 70 of the plunger and adapted for applying a second force F2 on the plunger per unit of length of the upper O-ring so as to form an upper sealing valve 72 between the chamber 60 and the exterior volume 16.

In the example, the upper O-ring 26 is compressed between the cap 38 and the second surface 70 of the plunger 24.

The lower O-ring 28 and the upper O-ring 26 are for example circular in view along the axis X and advantageously extend parallel to a plane P perpendicular to the axis X.

The lower O-ring 28 and the upper O-ring 26 for example have a same diameter D around the axis X.

The lower O-ring 28 and the upper O-ring 26 are for example structurally analogous to each other.

The first surface 62 and the second surface 68 of the terminal 18 advantageously comprise first portions 62A, 68A forming axial stops for the lower O-ring 28 and the upper O-ring 26 respectively, and second portions 62B, 68B forming radial stops for the lower O-ring 28 and the upper O-ring 26 respectively.

For example, the first portions 62A, 68A are perpendicular to the axis X, and the second portions 62B, 68B are parallel to the axis X.

The plunger 24 is for example axisymmetric around the axis X.

The first surface 64 and the second surface 70 of the plunger 24 are advantageously concave (hollow) with respect to the plunger.

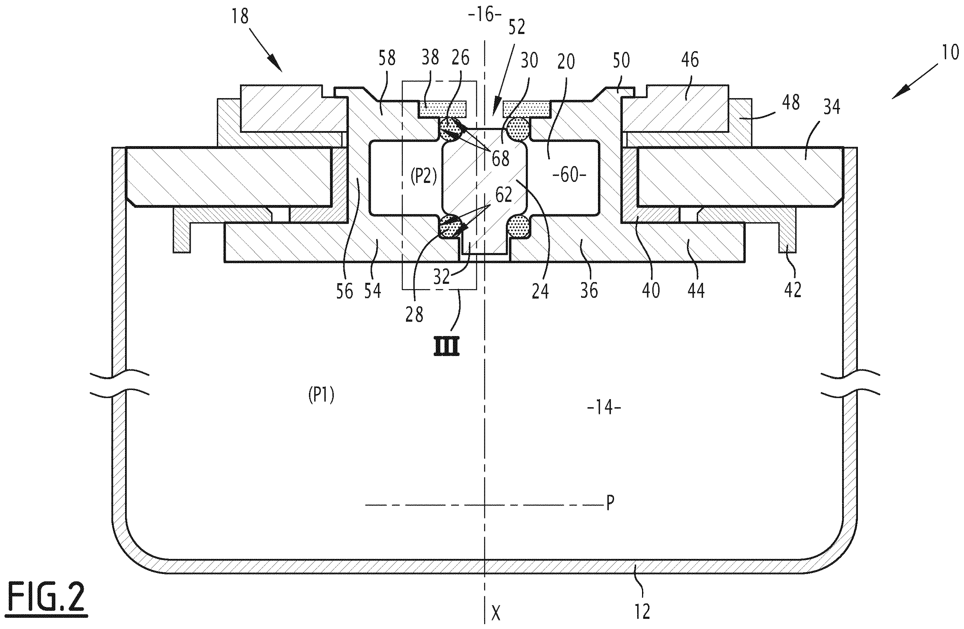

The plunger 24 is movable axially with respect to the terminal 18 between an equilibrium position (Figures 2 to 4), a first working position (not shown), wherein the plunger is shifted towards the upper O-ring 26, and a second working position (not shown), wherein the plunger is shifted back towards the lower O-ring 28 compared to the first working position.

The equilibrium position is intended to be occupied by the plunger 24 in particular when the first pressure P1, the second pressure P2 and the outside pressure P0 are equal to each other, for example before the cell 10 starts operating. In the equilibrium position, the first force F1 is larger than the second force F2.

The first working position is intended to be occupied by the plunger 24 when the cell 10 is under operation and the first pressure P1 has increased. In the first working position, the first force F1 is smaller than in the equilibrium position, and the second force F2 is larger than in the equilibrium position, thus allowing excess gas to move from the interior volume 14 into the chamber 60

and preventing gas and moisture from moving from the exterior volume 16 to the chamber 60.

The second working position is intended to be occupied by the plunger 24 when the cell 10 has stopped operating and the first pressure P1 has decreased. In the second working position, the first force F1 is larger than in the first working position. The second force F2 is smaller than in the first working position, thus allowing excess gas to move from the chamber 60 to the exterior volume 16 and preventing excess gas from moving from the chamber 60 to the interior volume 14.

In the equilibrium position, the first force F1 for example defines a first angle $\alpha$ with a first plane P1 perpendicular to the axis X and the second force F2 defines a second angle $\beta$ with a second plane P2 perpendicular to the axis X, the first angle $\alpha$ being advantageously smaller than the second angle $\beta$.

In the example or as an alternative, the first surface 64 of the plunger 24 defines a first contact point A between the lower O-ring 28 and the plunger, the first contact point A defining the first angle $\alpha$. The second surface 70 of the plunger 24 defines a second contact point B between the upper O-ring 26 and the plunger 24, the second contact point B defining the second angle $\beta$. The first angle $\alpha$ as defined above is smaller than the second angle $\beta$.

For example, the first angle $\alpha$ is comprised between 20° and 40°, and the second angle $\beta$ is comprised between 50° and 70°.

Advantageously, the first force F1 is the sum of an axial contribution $F1_T$ and a radial contribution $F1_R$. The second force F2 is the sum of an axial contribution $F2_T$ and a radial contribution $F2_R$.

$$F1_T = F1 \sin \alpha$$

$$F1_R = F1 \cos \alpha$$

$$F2_T = F2 \sin \beta$$

$$F2_R = F2 \cos \beta$$

In the equilibrium position, the plunger 24 is not affected by pressure differences, so $F1_T = F2_T$. As a consequence, $F1 = F2 \sin \beta / \sin \alpha$. Hence F1 is larger than F2.

If the first pressure P1 increases, the plunger 24 is adapted for moving up (towards the upper O-ring 26), so $F1_T$ decreases and $F2_T$ increases. As $F1 = F1_T / \sin \alpha$, F1 decreases rapidly. As $F2 = F2_T / \sin \beta$, F2 increases slowly.

Conversely, if the plunger moves down (towards the lower O-ring 28), F1 increases rapidly and F2 decreases slowly.

The operation of the cell 10 stems from its structure and will now be briefly described.

Initially, the lower sealing valve 66 and the upper sealing valve 72 are closed. For example P1 = P2 = P0

Then, the first pressure P1 increases as the cell 10 operates, while P2 is stable. This pushes the plunger 24 up from the equilibrium position to the first working position. F1 decreases, advantageously rapidly, and F2 increases, advantageously slowly. The lower sealing valve 66 opens. However, the upper sealing valve 72 tightens. This allows excess gas to move from the interior volume 14 to the chamber 60, while the upper sealing valve 72 prevents outside moisture from moving into the chamber 60.

When the cell 10 stops operating, its temperature decreases. P1 decreases. The plunger 24 moves from the first working position to the second working position. F1 increases rapidly while F2 decreases slowly. The upper sealing valve 72 loosens. Excess gas in the chamber 60 can move to the exterior volume 16 (the atmosphere) and P2 decreases. However, the lower sealing valve 66 closes tighter.

The above steps repeat themselves in order to keep eliminating excess gas from the interior volume 14 toward the exterior volume 16.

Thanks to the above features, the cell 10 is able to avoid excessive internal pressure P1, while preventing moisture from entering the cell. These features do not significantly increase the costs, nor reduce the energy density. Thanks to the double sealing valve 66-72 and the intermediate chamber 60, the risk of retro-diffusion of moisture from the atmosphere to the interior volume 14 is low. There is less risk that both sealing valves 66, 72 loosens at the same time.

**Claims**

1. An electrochemical cell (10) comprising

   - a can (12) defining an interior volume (14) intended to be at a first pressure (P1), and an exterior volume (16) intended to be at an outside pressure (P0),
   - at least one electrical terminal (18) connected to the can (12) in a gastight manner, the terminal (18) defining an axis (X) and forming a housing (20) extending from the interior volume (14) to the exterior volume (16),
   - a plunger (24) extending in the housing (20), and
   - an upper O-ring (26) and a lower O-ring (28) respectively located on an upper extremity (30) of the plunger (24) along the axis (X) toward the exterior volume (16), and on a lower extremity (32) of the plunger (24) toward the interior volume (14), the upper O-ring (26) and the lower O-ring (28) surrounding the axis (X), the terminal (18), the plunger (24), the upper O-ring (26) and the lower O-ring (28) delimiting an intermediate chamber (60) intended to be at a second pressure (P2),

the lower O-ring (28) being compressed between a first surface (62) of the terminal (18) and a first surface (64) of the plunger (24) and adapted for applying a first force (F1) on the plunger (24) per unit of length of the lower O-ring (28) so as to form a lower sealing valve (66) between the interior volume (14) and the chamber (60),

the upper O-ring (26) being compressed between a second surface (68) of the terminal (18) and a second surface (70) of the plunger (24) and adapted for applying a second force (F2) on the plunger (24) per unit of length of the upper O-ring (26) so as to form an upper sealing valve (72) between the chamber (60) and the exterior volume (16),

the plunger (24) being movable axially with respect to the terminal (18) between:

- an equilibrium position, intended to be occupied when the first pressure (P1), the second pressure (P2) and the outside pressure (P0) are equal to each other, and wherein the first force (F1) is larger than the second force (F2),

- a first working position, intended to be occupied when the cell (10) is under operation and the first pressure (P1) has increased, wherein the plunger (24) is shifted towards the upper O-ring (26), the first force (F1) is smaller than in the equilibrium position, and the second force (F2) is larger than in the equilibrium position, thus allowing excess gas to move from the interior volume (14) into the chamber (60) and preventing gas and moisture from moving from the exterior volume (16) to the chamber (60), and

- a second working position, intended to be occupied when the cell (10) has stopped operating and the first pressure (P1) has decreased, wherein the plunger (24) is shifted back towards the lower O-ring (28), the first force (F1) is larger than in the first operating position, and the second force (F2) is smaller than in the first operating position and smaller than the first force (F1), thus allowing excess gas to move from the chamber (60) to the exterior volume (16) and preventing excess gas from moving from the chamber (60) to the interior volume (14).

2. The cell (10) according to claim 1, wherein the plunger (24) is axisymmetric around the axis (X).

3. The cell (10) according to claim 1 or 2, wherein the lower O-ring (28) and the upper O-ring (26) are circular in view along the axis (X) and extend parallel to a plane (P) perpendicular to the axis (X).

4. The cell (10) according to claim 3, wherein the lower O-ring (28) and the upper O-ring (26) have a same diameter (D) around the axis (X).

5. The cell (10) according to any one of claims 1 to 4, wherein the lower O-ring (28) and the upper O-ring (26) are structurally analogous to each other.

6. The cell (10) according to any one of claims 1 to 5, wherein, in the equilibrium position, the first force (F1) defines a first angle ($\alpha$) with a first plane (P1) perpendicular to the axis (X), the second force (F2) defines a second angle ($\beta$) with a second plane (P2) perpendicular to the axis (X), the first angle ($\alpha$) being smaller than the second angle ($\beta$).

7. The cell (10) according to any one of claims 1 to 6, wherein, in the equilibrium position:

- the first surface (64) of the plunger (24) defines a first contact point (A) between the lower O-ring (28) and the plunger (24), the first contact point (A) defining a first angle ($\alpha$), and
- the second surface (70) of the plunger (24) defines a second contact point (B) between the upper O-ring (26) and the plunger (24), the second contact point (B) defining a second angle ($\beta$),

the first angle ($\alpha$) being smaller than the second angle ($\beta$).

8. The cell (10) according to any one of claims 1 to 7, wherein the first surface (64) and the second surface (70) of the plunger (24) are concave with respect to the plunger (24).

9. The cell (10) according to any one of claim 1 to 8, wherein the first surface (62) and the second surface (68) of the terminal (18) comprise first portions (62A, 68A) forming axial stops for the lower O-ring (28) and the upper O-ring (26) respectively, and second portions (62B, 68B) forming radial stops for the lower O-ring (28) and the upper O-ring (26) respectively.

10. The cell (10) according to claim 9, wherein:

- the first portions (62A, 68A) are perpendicular to the axis (X), and
- the second portions (62B, 68B) are parallel to the axis (X).

11. The cell (10) according to any one of claims 1 to 10, wherein the terminal (18) comprises a barrel (36) and a cap (38) delimiting the housing (20), the cap (38) being fixed on the barrel (36), the upper O-ring (26) being compressed between the cap (38) and the second surface (68) of the plunger (24), the barrel (36) defining an opening (52) adapted for allowing an introduction of the plunger (24) from the exterior volume (16) into the housing (20), the cap (38) being intended for being fixed to the barrel (36) after said introduction.

12. The cell (10) according to claim 11, wherein:

    - the barrel (36) comprises a lower part (54) along the axis (X) forming a foot (44) of the terminal (18), the foot (44) extending in the interior volume (14),
    - the barrel (36) comprises a median part (56) along the axis (X), the medial part (56) delimiting the housing (20) radially with respect to the axis (X), and
    - the terminal (18) comprises a sealing joint (40) compressed between the can (12), on the one hand, and the lower part (54) and/or the median part (56), on the other hand.

13. The cell (10) according to claim 12, wherein the terminal (18) comprises a first spacer (42) extending between the can (12) and the foot (44) along the axis (X).

14. The cell (10) according to any one of claims 11 to 13, wherein the terminal (18) comprises an outside part (46) with respect to the can (12), and a second spacer (48) extending between the outside part (46) and the can (12), and the outside part (46) surrounding the barrel (36) and being axially sandwiched between the second spacer (48) and a radial protuberance (40) of the barrel (36).

15. A battery, in particular for a vehicle, comprising at least one cell (10) as described by any one of claims 1 to 14.

FIG.1

<u>FIG.2</u>

FIG.3

# FIG.4

Europäisches
Patentamt
European
Patent Office
Office européen
des brevets

# EUROPEAN SEARCH REPORT

Application Number

EP 23 30 6163

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/166625 A1 (SCHEMBRI GEORGE [MT] ET AL) 10 July 2008 (2008-07-10) | 1-3, 5-11,15 | INV. H01M50/325 |
| A | * abstract * <br> * figures 5, 11 * <br> * paragraphs [0007], [0031], [0048] * <br> ----- | 4,12-14 | H01M50/578 <br><br> ADD. H01M10/052 |
| A | US 4 296 186 A (WOLF FRANZ J) 20 October 1981 (1981-10-20) <br> * abstract * <br> * figure 1 * <br> ----- | 1-15 | |

TECHNICAL FIELDS
SEARCHED      (IPC)

H01M

The present search report has been drawn up for all claims

| Place of search | Date of completion of the search | Examiner |
|---|---|---|
| The Hague | 7 December 2023 | Lange, Ronny |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**           EP 23 30 6163

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2023

| Patent document cited in search report | | Publication date | Patent family member(s) | | Publication date |
|---|---|---|---|---|---|
| US 2008166625 | A1 | 10-07-2008 | CN | 101138110 A | 05-03-2008 |
| | | | DE | 202005003835 U1 | 04-05-2005 |
| | | | EP | 1859497 A2 | 28-11-2007 |
| | | | ES | 2438736 T3 | 20-01-2014 |
| | | | JP | 4996593 B2 | 08-08-2012 |
| | | | JP | 2008533658 A | 21-08-2008 |
| | | | KR | 20070121732 A | 27-12-2007 |
| | | | US | 2008166625 A1 | 10-07-2008 |
| | | | WO | 2006095023 A2 | 14-09-2006 |
| US 4296186 | A | 20-10-1981 | NONE | | |

EPO FORM P0459

For more details about this annex : see Official Journal of the European Patent Office, No. 12/82

**EP 4 489 202 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2012028089 A